(19) Europäisches Patentamt
European Patent Office
Office européen des brevets

(11) **EP 4 163 826 B1**

(12) **EUROPEAN PATENT SPECIFICATION**

(45) Date of publication and mention
of the grant of the patent:
**22.07.2026 Bulletin 2026/30**

(21) Application number: **22199878.4**

(22) Date of filing: **05.10.2022**

(51) International Patent Classification (IPC):
*G06N 3/006* (2023.01)   *B25J 9/16* (2006.01)
*G06N 3/044* (2023.01)   *G06N 3/045* (2023.01)
*G06N 3/092* (2023.01)   *G06N 7/01* (2023.01)

(52) Cooperative Patent Classification (CPC):
**G06N 3/006; B25J 9/161; B25J 9/163;
G06N 3/0442; G06N 3/0455; G06N 3/092;**
G05B 2219/39271; G05B 2219/40607; G06N 3/047

(54) **COMPOSITIONAL GENERALIZATION FOR REINFORCEMENT LEARNING**

ZUSAMMENSETZUNGSVERALLGEMEINERUNG FÜR VERSTÄRKUNGSLERNEN

GÉNÉRALISATION DE COMPOSITION POUR APPRENTISSAGE PAR RENFORCEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.10.2021 US 202163252564 P**

(43) Date of publication of application:
**12.04.2023 Bulletin 2023/15**

(73) Proprietor: **GDM Holding LLC
Mountain View, CA 94043 (US)**

(72) Inventor: **CARVALHO, Wilka Torrico
London, N1C 4AG (GB)**

(74) Representative: **Marks & Clerk GST
1 New York Street
Manchester M1 4HD (GB)**

(56) References cited:
**WO-A2-2022/167657     US-A1- 2021 114 209**

**Description**

BACKGROUND

This specification relates to reinforcement learning.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters. US 2021/0114209 A1 discloses a robot control device for controlling a robot configured to perform a predetermined operation. The robot control device is configured to acquire images captured by a plurality of image capturing devices, and use the image as an input to a neural network configured to specify a control instruction.

SUMMARY

This specification generally describes a reinforcement learning system that controls an agent interacting with an environment to perform one or more tasks, including object-centric tasks such as object manipulation task and environment navigation tasks. An object manipulation task typically requires picking up, dropping off, and/or otherwise manipulating a target object in the environment; an environment navigation task typically requires avoiding and/or otherwise dealing with obstacles in the environment.

The disclosure provides methods, systems and computer-readable storage media as defined by the independent claims. In general, one innovative aspect of the subject matter described in this specification can be embodied in a computer-implemented method for controlling an agent interacting with an environment to perform a task, the method comprising: receiving an observation that characterizes a current state of the environment; processing the observation using an encoder neural network configured to receive as input the observation and to generate as output an encoder representation of the observation that comprises a respective feature vector for each of a plurality of spatially distinct portions of the observation, wherein each respective feature vector has a plurality of dimensions; for each of a plurality of subschema recurrent neural networks: generating a respective attention weight for each of the plurality of dimensions from at least a subschema hidden state of the subschema recurrent neural network, generating an attended encoder representation, comprising applying, to the respective feature vector for each of the plurality of spatially distinct portions of the observation, the respective attention weights, and updating the subschema hidden state using at least the attended encoder representation; and selecting an action to be performed by the agent in response to the observation using the updated subschema hidden states of the plurality of subschema recurrent neural networks.

The observation may comprise an image, and wherein the plurality of spatially distinct portions of the observation may correspond to different spatial positions of (in) the image.

The observation may comprise an audio (observation), and wherein the plurality of spatially distinct portions of the observation may correspond to different frequency bands of the audio (observation).

The observation may comprise proprioception information of a robot, and wherein the plurality of spatially distinct portions of the observation may correspond to different body parts of the robot.

The method may further comprise, for each of the plurality of subschema recurrent neural networks: determining a subschema query from (i) the subschema hidden state of the subschema recurrent neural network and one or more of: (ii) a preceding action performed by the agent in response to a preceding observation characterizing a preceding state of the environment state that precedes the current state of the environment state, or (iii) a preceding reward received in response to the agent performing the preceding action.

The method may further comprise determining the subschema query from task description text that specifies the task being performed by the agent.

Generating the respective attention weight for each of the plurality of dimensions may comprise: generating the respective attention weight for each of the plurality of dimensions based on applying one or more sets of learnt feature coefficient weights to the subschema query.

Applying, to the respective feature vector for each of the plurality of spatially distinct portions of the observation, the respective attention weights may comprise: computing an element-wise product between the respective attention weights and the respective feature vector for each of the plurality of spatially distinct portions of the observation.

The method may further comprise, for each of the plurality of subschema recurrent neural networks: obtaining shared subschema information from the subschema hidden states of other subschema recurrent neural networks in the plurality of subschema recurrent neural networks, comprising applying an attention mechanism over the subschema hidden states of the plurality of subschema recurrent neural networks using one or more queries derived from the subschema query of the subschema recurrent neural network.

Obtaining the shared subschema information may further comprise applying the attention mechanism over a null vector in addition to the subschema hidden states of the plurality of subschema recurrent neural networks.

Updating the subschema hidden state may comprise updating the subschema hidden state using the attended encoder representation and the shared subschema information.

Selecting the action to be performed by the agent may comprise: processing a policy input comprising the updated subschema hidden states of the plurality of subschema recurrent neural networks using an output network, in particular an action selection policy neural network, to generate an action selection policy output that, directly or indirectly, specifies the action to be performed by the agent.

The method may further comprise training the action selection policy neural network through reinforcement learning to determine trained parameter values of the action selection policy neural network, in particular based on rewards received in response to the agent performing the selected actions. In general such training can involve backpropagating gradients of a reinforcement learning objective function to update parameters of the action selection policy neural network.

The method, in particular the training through reinforcement learning, may further comprise determining respective trained parameter values of the encoder neural network and the plurality of subschema recurrent neural networks through reinforcement learning. That is, the encoder neural network and the plurality of subschema recurrent neural networks may be trained jointly with the action selection policy neural network.

The task may comprise one of: an object manipulation task or an environment navigation task.

The agent may be a mechanical agent, the environment may be a real-world environment, and the observation may comprise data from one or more sensors configured to sense the real-world environment.

Other embodiments of this aspect include corresponding computer systems, apparatus, and computer programs recorded on one or more computer storage devices, each configured to perform the actions of the methods. A system of one or more computers can be configured to perform particular operations or actions by virtue of software, firmware, hardware, or any combination thereof installed on the system that in operation may cause the system to perform the actions. One or more computer programs can be configured to perform particular operations or actions by virtue of including instructions that, when executed by data processing apparatus, cause the apparatus to perform the actions.

The subject matter described in this specification can be implemented in particular embodiments so as to realize one or more of the following advantages. First, the reinforcement learning system described in this specification can control the agent to perform a task with greater success than some known RL systems. This is particularly true for environments for which the observation data includes pixel data (e.g., intensity data at respective pixels), and/or for tasks requiring interaction between multiple entities (e.g., target objects or obstacles) at respective spaced apart locations within the environment. For example, the described system can control an agent to attain higher performance in tasks that involve object manipulation such as object pick-and-place, modular environment navigation, or both. From another point of view, this increase in performance efficiency makes possible a reduction in training time or memory requirement or both compared to a known system which performs the same task with the same accuracy.

Furthermore, during the training of the neural network system, the subschema recurrent neural networks, together with the encoder neural network, learn to identify objects, and in particular spatiotemporal relationships between the objects, directly from the observation. This means that defining a task in which the agent operates on objects, e.g., by specifying an object-based language and requiring the system to interpret commands in that language to control the agent, is no longer needed. Instead, the system described in this specification learns the relevant objects and their relations directly from the input observation. The encoder neural network and the subschema recurrent neural networks are operative to generate data which characterizes the observation in a way which is informed by these relations, such that the output network is able to generate an action selection output based on them. In addition, the neural networks, when trained to perform tasks in an environment including certain objects, exhibited a high capacity to generalize such that in use they were able to successfully perform other tasks involving similar objects, including more complex tasks and tasks including sub-goals which were not used during the training procedure.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example reinforcement learning system.

FIG. 2 is an example illustration of generating encoder representations of observations by using a recurrent encoder neural network.

FIG. 3 is a flow diagram of an example process for controlling an agent.

FIG. 4 is an example illustration of operations performed by an agent neural network.

FIG. 5 shows a quantitative example of the performance gains that can be achieved by using an agent neural network described in this specification.

Like reference numbers and designations in the various drawings indicate like elements.

DETAILED DESCRIPTION

This specification describes a reinforcement learning system that controls an agent interacting with an environment by, at each of multiple time steps, processing data characterizing the current state of the environment at the time step (i.e., an "observation") to select an action to be performed by the agent.

At each time step, the state of the environment at the time step depends on the state of the environment at the previous time step and the action performed by the agent at the previous time step.

In some implementations, the environment is a real-world environment, the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator. For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control signals to control the robot or other mechanical agent, e.g., torques for the joints of the robot or higher-level control commands, or the autonomous or semi-autonomous land, air, sea vehicle, e.g., torques to the control surface or other control elements e.g. steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land or air or sea vehicle the control signals may define actions to control navigation e.g. steering, and movement e.g., braking and/or acceleration of the vehicle.

In some implementations the environment is a simulation of the above-described real-world environment, and the agent is implemented as one or more computers interacting with the simulated environment. For example the simulated environment may be a simulation of a robot or vehicle and the reinforcement learning system may be trained on the simulation and then, once trained, used in the real-world.

In some implementations the environment is a real-world manufacturing environment for manufacturing a product, such as a chemical, biological, or mechanical product, or a food product. As used herein a "manufacturing" a product also includes refining a starting material to create a product, or treating a starting material e.g. to remove pollutants, to generate a cleaned or recycled product. The manufacturing plant may comprise a plurality of manufacturing units such as vessels for chemical or biological substances, or machines, e.g. robots, for processing solid or other materials. The manufacturing units are configured such that an intermediate version or component of the product is moveable between the manufacturing units during manufacture of the product, e.g. via pipes or mechanical conveyance. As used herein manufacture of a product also includes manufacture of a food product by a kitchen robot.

The agent may comprise an electronic agent configured to control a manufacturing unit, or a machine such as a robot, that operates to manufacture the product. That is, the agent may comprise a control system configured to control the manufacture of the chemical, biological, or mechanical product. For example the control system may be configured to control one or more of the manufacturing units or machines or to control movement of an intermediate version or component of the product between the manufacturing units or machines.

As one example, a task performed by the agent may comprise a task to manufacture the product or an intermediate version or component thereof. As another example, a task performed by the agent may comprise a task to control, e.g. minimize, use of a resource such as a task to control electrical power consumption, or water consumption, or the consumption of any material or consumable used in the manufacturing process.

The actions may comprise control actions to control the use of a machine or a manufacturing unit for processing a solid or liquid material to manufacture the product, or an intermediate or component thereof, or to control movement of an intermediate version or component of the product within the manufacturing environment e.g. between the manufacturing units or machines. In general the actions may be any actions that have an effect on the observed state of the environment, e.g. actions configured to adjust any of the sensed parameters described below. These may include actions to adjust the physical or chemical conditions of a manufacturing unit, or actions to control the movement of mechanical parts of a machine or joints of a robot. The actions may include actions imposing operating conditions on a manufacturing unit or machine, or actions that result in changes to settings to adjust, control, or switch on or off the operation of a manufacturing unit or machine.

The rewards or return may relate to a metric of performance of the task. For example in the case of a task that is to manufacture a product the metric may comprise a metric of a quantity of the product that is manufactured, a quality of the product, a speed of production of the product, or to a physical cost of performing the manufacturing task, e.g. a metric of a quantity of energy, materials, or other resources, used to perform the task. In the case of a task that is to control use a resource the matric may comprise any metric of usage of the resource.

In general observations of a state of the environment may comprise any electronic signals representing the functioning of electronic and/or mechanical items of equipment. For example a representation of the state of the environment may be derived from observations made by sensors sensing a state of the manufacturing environment, e.g. sensors sensing a state or configuration of the manufacturing units or machines, or sensors sensing movement of material between the manufacturing units or machines. As some examples such sensors may be configured to sense mechanical movement or force, pressure, temperature; electrical conditions such as current, voltage, frequency, impedance; quantity, level, flow/movement rate or flow/movement path of one or more materials; physical or chemical conditions e.g. a physical state, shape or configuration or a chemical state such as pH; configurations of the units or machines such as the mechanical configuration of a unit or machine, or valve configurations; image or video sensors to capture image or video observations of the manufacturing units or of the machines or movement; or any other appropriate type of sensor. In the case of a machine such as a robot the observations from the sensors may include observations of position, linear or angular velocity, force, torque or acceleration, or pose of one or more parts of the machine, e.g. data characterizing the current state of the machine or robot or of an item held or processed by the machine or robot. The observations may also include, for example, sensed electronic signals such as motor current or a temperature signal, or image or video data for example from a camera or a LIDAR sensor. Sensors such as these may be part of or located separately from the agent in the environment.

In some implementations the environment is the real-world environment of a service facility comprising a plurality of items of electronic equipment, such as a server farm or data center, for example a telecommunications data center, or a computer data center for storing or processing data, or any service facility. The service facility may also include ancillary control equipment that controls an operating environment of the items of equipment, for example environmental control equipment such as temperature control e.g. cooling equipment, or air flow control or air conditioning equipment. The task may comprise a task to control, e.g. minimize, use of a resource, such as a task to control electrical power consumption, or water consumption. The agent may comprise an electronic agent configured to control operation of the items of equipment, or to control operation of the ancillary, e.g. environmental, control equipment.

In general the actions may be any actions that have an effect on the observed state of the environment, e.g. actions configured to adjust any of the sensed parameters described below. These may include actions to control, or to impose operating conditions on, the items of equipment or the ancillary control equipment, e.g. actions that result in changes to settings to adjust, control, or switch on or off the operation of an item of equipment or an item of ancillary control equipment.

In general observations of a state of the environment may comprise any electronic signals representing the functioning of the facility or of equipment in the facility. For example a representation of the state of the environment may be derived from observations made by any sensors sensing a state of a physical environment of the facility or observations made by any sensors sensing a state of one or more of items of equipment or one or more items of ancillary control equipment. These include sensors configured to sense electrical conditions such as current, voltage, power or energy; a temperature of the facility; fluid flow, temperature or pressure within the facility or within a cooling system of the facility; or a physical facility configuration such as whether or not a vent is open.

The rewards or return may relate to a metric of performance of the task. For example in the case of a task to control, e.g. minimize, use of a resource, such as a task to control use of electrical power or water, the metric may comprise any metric of use of the resource.

In some implementations the environment is the real-world environment of a power generation facility e.g. a renewable power generation facility such as a solar farm or wind farm. The task may comprise a control task to control power generated by the facility, e.g. to control the delivery of electrical power to a power distribution grid, e.g. to meet demand or to reduce the risk of a mismatch between elements of the grid, or to maximize power generated by the facility. The agent may comprise an electronic agent configured to control the generation of electrical power by the facility or the coupling of generated electrical power into the grid. The actions may comprise actions to control an electrical or mechanical configuration of an electrical power generator such as the electrical or mechanical configuration of one or more renewable power generating elements e.g. to control a configuration of a wind turbine or of a solar panel or panels or mirror, or the electrical or mechanical configuration of a rotating electrical power generation machine. Mechanical control actions may, for example, comprise actions that control the conversion of an energy input to an electrical energy output, e.g. an efficiency of the conversion or a degree of coupling of the energy input to the electrical energy output. Electrical control actions may, for example, comprise actions that control one or more of a voltage, current, frequency or phase of electrical power generated.

The rewards or return may relate to a metric of performance of the task. For example in the case of a task to control the delivery of electrical power to the power distribution grid the metric may relate to a measure of power transferred, or to a measure of an electrical mismatch between the power generation facility and the grid such as a voltage, current, frequency or phase mismatch, or to a measure of electrical power or energy loss in the power generation facility. In the case of a task to maximize the delivery of electrical power to the power distribution grid the metric may relate to a measure of electrical power or energy transferred to the grid, or to a measure of electrical power or energy loss in the power generation facility.

In general observations of a state of the environment may comprise any electronic signals representing the electrical or mechanical functioning of power generation equipment in the power generation facility. For example a representation of the state of the environment may be derived from observations made by any sensors sensing a physical or electrical state of equipment in the power generation facility that is generating electrical power, or the physical environment of such equipment, or a condition of ancillary equipment supporting power generation equipment. Such sensors may include sensors configured to sense electrical conditions of the equipment such as current, voltage, power or energy; temperature or cooling of the physical environment; fluid flow; or a physical configuration of the equipment; and observations of an electrical condition of the grid e.g. from local or remote sensors. Observations of a state of the environment may also comprise one or more predictions regarding future conditions of operation of the power generation equipment such as predictions of future wind levels or solar irradiance or predictions of a future electrical condition of the grid.

In a comparative example, the environment may be a chemical synthesis or protein folding environment such that each state is a respective state of a protein chain or of one or more intermediates or precursor chemicals and the agent is a computer system for determining how to fold the protein chain or synthesize the chemical. In this example, the actions are possible folding actions for folding the protein chain or actions for assembling precursor chemicals/intermediates and the result to be achieved may include, e.g., folding the protein so that the protein is stable and so that it achieves a particular biological function or providing a valid synthetic route for the chemical. As another example, the agent may be a mechanical agent that performs or controls the protein folding actions or chemical synthesis steps selected by the system automatically without human interaction. The observations may comprise direct or indirect observations of a state of the protein or chemical/ intermediates/ precursors and/or may be derived from simulation.

In a similar way in a comparative example the environment may be a drug design environment such that each state is a respective state of a potential pharmachemical drug and the agent is a computer system for determining elements of the pharmachemical drug and/or a synthetic pathway for the pharmachemical drug. The drug/synthesis may be designed based on a reward derived from a target for the drug, for example in simulation. As another example, the agent may be a mechanical agent that performs or controls synthesis of the drug.

In some further applications, the environment is a real-world environment and the agent manages distribution of tasks across computing resources e.g. on a mobile device and/or in a data center. In these implementations, the actions may include assigning tasks to particular computing resources.

As further comparative example, the actions may include presenting advertisements, the observations may include advertisement impressions or a click-through count or rate, and the reward may characterize previous selections of items or content taken by one or more users.

In some cases, the observations may include textual or spoken instructions provided to the agent by a third-party (e.g., an operator of the agent). For example, the agent may be an autonomous vehicle, and a user of the autonomous vehicle may provide textual or spoken instructions to the agent (e.g., to navigate to a particular location).

As another comparative example the environment may be an electrical, mechanical or electro-mechanical design environment, e.g. an environment in which the design of an electrical, mechanical or electro-mechanical entity is simulated. The simulated environment may be a simulation of a real-world environment in which the entity is intended to work. The task may be to design the entity. The observations may comprise observations that characterize the entity, i.e. observations of a mechanical shape or of an electrical, mechanical, or electro-mechanical configuration of the entity, or observations of parameters or properties of the entity. The actions may comprise actions that modify the entity e.g. that modify one or more of the observations. The rewards or return may comprise one or more metric of performance of the design of the entity. For example rewards or return may relate to one or more physical characteristics of the entity such as weight or strength or to one or more electrical characteristics of the entity such as a measure of efficiency at performing a particular function for which the entity is designed. The design process may include outputting the design for manufacture, e.g. in the form of computer executable instructions for manufacturing the entity. The process may include making the entity according to the design. Thus a design an entity may be optimized, e.g. by reinforcement learning, and then the optimized design output for manufacturing the entity, e.g. as computer executable instructions; an entity with the optimized design may then be manufactured.

As previously described in a comparative example the environment may be a simulated environment. Generally in the case of a simulated environment the observations may include simulated versions of one or more of the previously described observations or types of observations and the actions may include simulated versions of one or more of the previously described actions or types of actions. For example the simulated environment may be a motion simulation environment, e.g., a driving simulation or a flight simulation, and the agent may be a simulated vehicle navigating through the motion simulation. In these implementations, the actions may be control inputs to control the simulated user or simulated vehicle. Generally the agent may be implemented as one or more computers interacting with the simulated environment.

The simulated environment may be a simulation of a particular real-world environment and agent. For example, the system may be used to select actions in the simulated environment during training or evaluation of the system and, after training, or evaluation, or both, are complete, may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example the system may be partly trained using a simulation of a mechanical agent in a simulation of a particular real-world environment, and afterwards deployed to control the real mechanical agent in the particular real-world environment. Thus in such cases the observations of the simulated environment relate to the real-world environment, and the selected actions in the simulated environment relate to actions to be performed by the mechanical agent in the real-world environment.

Optionally, in any of the above implementations, the observation at any given time step may include data from a previous time step that may be beneficial in characterizing the environment, e.g., the action performed at the previous time step, the reward received at the previous time step, or both.

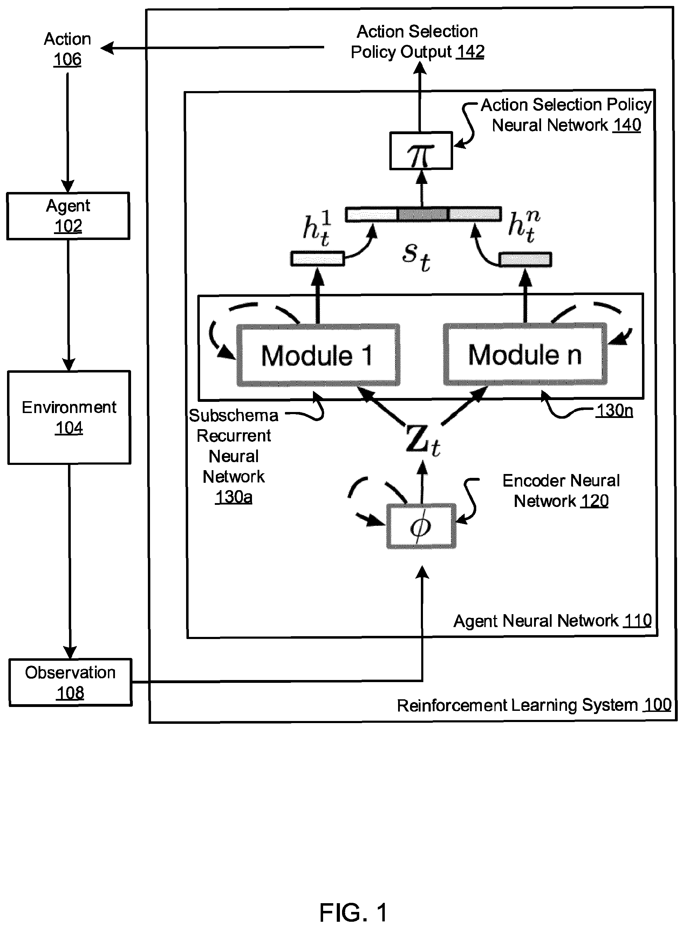

FIG. 1 shows an example reinforcement learning system 100. The reinforcement learning system 100 is an example of a system implemented as computer programs on one or more computers in one or more locations in which the systems, components, and techniques described below are implemented.

The reinforcement learning system 100 controls an agent 102 interacting with an environment 104 by selecting actions 106 to be performed by the agent 102 and then causing the agent 102 to perform the selected actions 106, such as by transmitting control data to the agent 102 which instructs the agent 102 to perform the action 102. In some cases, the reinforcement learning system 100 may be mounted on, or be a component of, the agent 102, and the control data is transmitted to actuator(s) of the agent.

Performance of the selected actions 106 by the agent 102 generally causes the environment 104 to transition into successive new states. By repeatedly causing the agent 102 to act in the environment 104, the system 100 can control the agent 102 to complete a specified task.

In particular, the reinforcement learning system 100 selects actions 106 to be performed by the agent 102 using an agent neural network 110. At a high level, the agent neural network 110 is configured to process, at each of multiple time steps, an agent network input that includes the current observation 108 characterizing the current state of the environment 104 in accordance with the learned values of the parameters of the agent neural network 110 to generate an action selection policy output 142 that can be used to select a current action 106 to be performed by the agent 102 in response to the current observation 108.

The agent neural network 110 is implemented with a neural network architecture that enables it to exploit the structure that may be induced by the entities in the environment, as well as to flexibly recombine its agent control experience for generalization across a wide range of different tasks, and particularly object-centric tasks where the entities in the environment include one or more target objects or obstacles and the agent 102 would be required to perform the tasks through frequent interaction with these objects (e.g., manipulation of a target object, avoidance from an obstacle, and so on). In particular, as illustrated in FIG. 1, the agent neural network 110 includes an encoder neural network $\phi$ 120, a group of multiple subschema recurrent neural networks 130a-n, and an action selection policy neural network $\pi$ 140.

The encoder neural network 120 can have any appropriate architecture that allows the neural network 120 to map an observation to an encoder representation of the observation, which may be a representation having a lower dimensionality than the observation. For example, the encoder neural network 120 can be a recurrent neural network configured as a neural network that includes a stack of convolutional layers followed by one or more LSTM layers, e.g., one or more convolutional LSTM layers. A convolutional LSTM layer is a long short-term memory (LSTM) layer that replaces matrix multiplication with convolution operations at each gate in the LSTM cell.

At each time step t during the controlling of the agent 102, the encoder neural network 120 receives an input that includes the current observation $o_t$ 108 that characterizes the current state of the environment 104 at the time step and processes (i) the input and (ii) an encoder representation $Z_{t-1}$ of a previous observation that characterizes the preceding state of the environment at the previous time step to generate an encoder representation $Z_t$ of the current observation that characterizes the current state of the environment at the time step.

The encoder representation Z includes a respective feature vector for each of a plurality of spatially distinct portions of the current observation 108 that characterizes the current state of the environment 104. Each feature vector has multiple dimensions, with each dimension-i.e., each element of the vector-being a numeric or other value, e.g., string. Each feature vector represents features determined by the encoder neural network 120 for one or more entities, e.g., objects, obstacles, or the like, that may be present in the distinct portion of the observation that corresponds to the feature vector.

The spatially distinct portions generally correspond to different respective subsets of the observation of the state of the environment, which are spatially or otherwise logically displaced relative to each other in the observation. For example, when the observation includes an image defined by pixels, the plurality of spatially distinct portions of the observation may correspond to different regions of the image. As another example, when the observation includes an audio, the plurality of spatially distinct portions of the observation may correspond to different frequency bands of the audio. As yet another example, when the observation includes proprioception information of a robotic agent (or another mechanical agent), the plurality of spatially distinct portions of the observation may correspond to different body parts, such as different links, of the robotic agent.

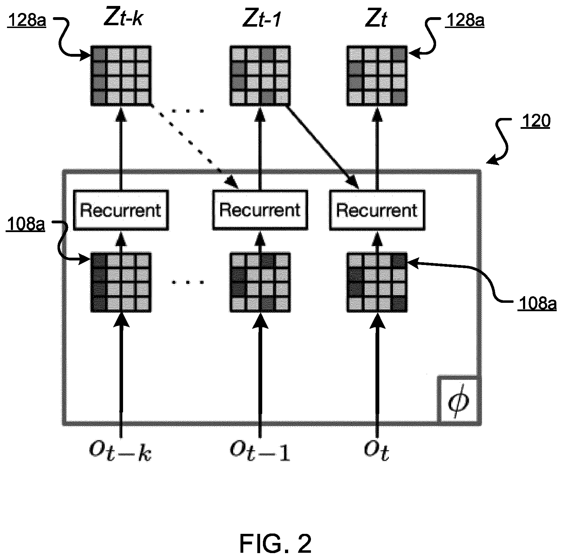

FIG. 2 is an example illustration of generating encoder representations of observations by using the encoder neural network 120 of FIG. 1. As illustrated in FIG. 2, at each of multiple time steps, the encoder neural network 120, which is configured as a recurrent neural network, receives an input that includes the current observation $o_t$ that characterizes the current state of the environment at the time step, and processes (i) the input and (ii) an encoder representation $Z_{t-1}$ of a previous observation that characterizes the preceding state of the environment at the previous time step to generate (iii) an encoder representation $Z_t$ of the current observation at the time step. Each observation is defined by arrays of cells that each correspond to a spatially distinct portion of the observation. In the example of the observation being an image, each cell may include a group of one or more pixels.

In particular, the encoder neural network 120 is configured to generate, for each cell, e.g., cell 108a, in the arrays of cells, a feature vector of multiple numeric values that represent the features (such as spatiotemporal features) of one or more entities (corresponding to different objects or obstacles) that may be present in the distinct portion of the observation that corresponds to the cell. The feature vectors will then be arranged, e.g. in a given order, to form the encoder representation Z. In the example of FIG. 2, the feature vectors, which are illustrated as cells, e.g., the cell 128a which corresponds to a feature vector, are similarly arranged along horizontal and vertical directions as the cells in the observation, although this is not required. It will be appreciated that in other examples, the feature vectors can be arranged in a different order, e.g., vertically stacked or horizontally concatenated.

As the environment transitions into new states, the entities in the environment may, and generally will, change their locations, for example an object could move from one place to another within the environment over the multiple time steps. In these cases, the recurrent encoder neural network 120 can determine different features for the same portion of the observation at different time steps-or, put another way- the same (or substantially similar) feature vectors may hold different positions in the order in which the feature vectors are arranged. For example, in FIG. 2, as an object present moves from the distinct portion of the observation that corresponds to the top left corner of the arrays of cells (at time step t-k) to the distinct portion of the observation that corresponds to the top right corner of the arrays of cells (at time step t), the feature vector determined by the recurrent encoder neural network 120 for the object correspondingly shifts its position in the order in which the feature vectors are arranged to form the encoder representation Z (similarly from top left corner to top right corner).

Referring back to FIG. 1, the agent neural network 110 includes a plurality of subschema recurrent neural networks 130a-n. For example, each subschema recurrent neural network can include one or more long short-term memory (LSTM) layers or one or more gated recurrent unit (GRU) layers. Each subschema recurrent neural network, e.g., subschema recurrent neural network 130a, maintains an internal state (referred to below as a subschema hidden state) h and updates that subschema hidden state h at each time step as part of controlling the agent 102. As used in this specification, at each time step t, a subschema hidden state before the update will be referred to as the subschema hidden state $h_{t-1}$ at the time step, while the same subschema hidden state after the update will be referred to as the updated subschema hidden state $h_t$ at the time step.

At each time step t and for each subschema recurrent neural network, the agent neural network 110 first operates, in parallel and independently from one another, on the encoder representation $Z_t$, which includes a respective feature vector for each of a plurality of spatially distinct portions of the current observation 108, through the use of a dynamic feature attention mechanism to generate an attended encoder observation $u_t$ for the subschema recurrent neural network at the time step t; next, the agent neural network 110 optionally applies a scaled dot-product attention mechanism across the respective subschema hidden states $h_{t-1}$ of the plurality of subschema recurrent neural networks to obtain shared subschema information $v_t$ from other subschema recurrent neural networks for each subschema recurrent neural network at the time step t.

Both the dynamic feature attention mechanism and the scaled dot-product attention mechanism are dependent on subschema queries. For each subschema recurrent neural network, the corresponding subschema query $q_{t-1}$ at the time step can be determined from (i) the subschema hidden state $h_{t-1}$ of the subschema recurrent neural network at the time step, and one or more of: (ii) a preceding action $a_{t-1}$ performed by the agent in response to a preceding observation characterizing a preceding state of the environment state that precedes the current state of the environment state, or (iii) a preceding reward $r_{t-1}$ received in response to the agent performing the preceding action.

Each subschema recurrent neural network then processes an input that includes (i) the subschema query $q_{t-1}$ at the time step, (ii) the attended encoder observation $u_t$ at the time step t, and, in some implementations, (iii) the shared subschema information $v_t$ at the time step t to update its internal state, i.e., to generate the updated subschema hidden state $h_t$ at the time step.

As will be described further below, the use of the dynamic feature attention mechanism and the scaled dot-product attention mechanism, with one being applied over the respective feature vectors for the plurality of spatially distinct portions of the observation and the other being applied over the subschema hidden states of the plurality of subschema recurrent neural networks, enables each subschema recurrent neural network to dynamically attend to spatiotemporal features that may be present across various locations of the observation, as well as to retrieve relevant information from the other subschema recurrent neural networks. Because multiple subschema recurrent neural networks 130a-n are implemented, the dynamic feature attention mechanism employed by each network allows for the network to attend to a respective subset of features in the observation 108, e.g., to a different pattern, structure, or another aspect of the environment, and thus enhances the expressivity of these environment features.

At each time step t, the agent neural network 110 generates a policy input $S_t$ for the current observation 108 from, e.g., by determining a combination of, these subschema hidden states.

The agent neural network 110 includes an action selection policy neural network 140 for generating the action selection policy output 142 of the reinforcement learning system 110 from the policy input. The action selection policy output 142 will be used as control data for controlling the agent 102 which interacts with the environment 104.

A few examples of using the action selection policy output 142 to select the action to be performed by the agent are described next.

In one example, the action selection policy output 142 may include a respective numerical probability value for each action in a set of possible actions that can be performed by the agent. The system can select the action to be performed by the agent, e.g., by sampling an action in accordance with the probability values for the actions, or by selecting the action with the highest probability value.

In another example, the action selection policy output 142 may directly define the action to be performed by the agent, e.g., by defining the values of torques that should be applied to the joints of a robotic agent.

In another example, in some cases, in order to allow for fine-grained control of the agent, the system 100 may treat the space of actions to be performed by the agent, i.e., the set of possible control inputs, as a continuous space. Such settings are referred to as continuous control settings. In these cases, the action selection policy output 142 can be the parameters of a multi-variate probability distribution over the space, e.g., the means and covariances of a multi-variate Normal distribution, and the action 106 may be selected as a sample from the multi-variate probability distribution.

In yet another example, the action selection policy output 142 may include a respective Q value for each action in the set of possible actions that can be performed by the agent. The system can process the Q values (e.g., using a soft-max function) to generate a respective probability value for each possible action, which can be used to select the action to be performed by the agent (as described earlier). The system could also select the action with the highest Q value as the action to be performed by the agent.

The Q value for an action is an estimate of a "return" that would result from the agent performing the action in response to the current observation and thereafter selecting future actions performed by the agent in accordance with current values of the agent neural network parameters.

A return refers to a cumulative measure of "rewards" received by the agent, for example, a time-discounted sum of rewards. The agent can receive a respective reward at each time step, where the reward is specified by a scalar numerical value and characterizes, e.g., a progress of the agent towards completing an assigned task.

In some cases, the reinforcement learning system 100 can select the action to be performed by the agent in accordance with an exploration policy. For example, the exploration policy may be an ε-greedy exploration policy, where the system selects the action to be performed by the agent in accordance with the action selection output with probability 1-ε, and randomly selects the action with probability ε. In this example, ε is a scalar value between 0 and 1. As another example, exploration noise can be added to the action selection policy output so as to encourage action exploration. For example, the noise can be Gaussian distributed noise with an exponentially decaying magnitude.

To allow the agent 102 to effectively perform the task by interacting with the environment 104, the reinforcement learning system 100 can train the agent neural network 110 to determine trained values of the parameters of the agent neural network, i.e., including the trained values of the parameters of the encoder network 120, the group of one or more subschema recurrent neural networks 130a-n, the action selection policy neural network 140, as well as additional trainable parameters of the agent neural network that define the dynamic feature attention mechanism and the scaled dot-product attention mechanism.

The reinforcement learning system 100 trains the agent neural network 110 by repeatedly updating these parameters of the agent neural network 110 based on the interactions of the agent 102 with the environment 104. In particular, the system trains the agent neural network 110 using reinforcement learning using observations 108 and rewards generated as a result of the agent 102 (or another agent) interacting with the environment 104 (or another instance of the environment) during training.

Generally, the reinforcement learning system 100 can train the agent neural network 110 to increase the return (i.e., cumulative measure of reward) received by the agent using any appropriate reinforcement learning technique. One example of a technique that can be used by the system to train the agent neural network 110 is the IMPALA V-trace technique, described in Espeholt, L., et al. Impala: Scalable distributed deep-rl with importance weighted actor-learner architectures. arXiv preprint arXiv:1802.01561, 2018.

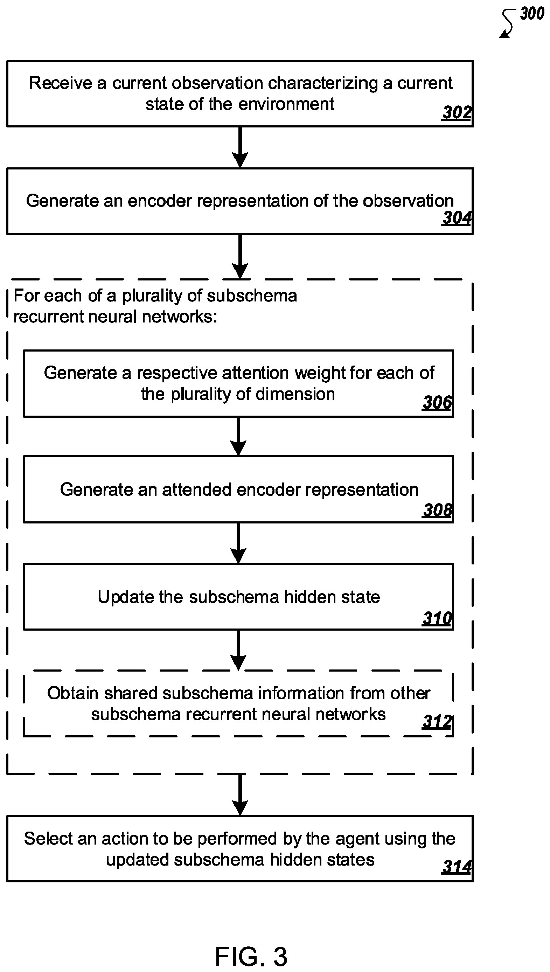

FIG. 3 is a flow diagram of an example process 300 for controlling an agent interacting with an environment to perform a task. For convenience, the process 300 will be described as being performed by a system of one or more computers located in one or more locations. For example, a reinforcement learning system, e.g., the reinforcement learning system 100 of FIG.1, appropriately programmed, can perform the process 300.

In general the system can repeatedly perform the process 300 at each of multiple time steps to select a respective action (referred to as the "current" action below) to be performed by the agent at a respective state of the environment (referred to as the "current" state below) that corresponds to the time step (referred to as the "current" time step below), i.e., to cause the agent to interact with the environment to perform the task.

The system receives an observation that characterizes a current state of the environment at the current time step (step 302).

The system processes the observation using an encoder neural network to generate an encoder representation of the observation (step 304). The encoder neural network (denoted as $\phi$) is configured to receive an input that includes the observation $o_t$ that characterizes the current state of the environment at the current time step and processes (i) the input and (ii) an encoder representation of a previous observation that characterizes the preceding state of the environment at the previous time step to generate an encoder representation $Z_t$ of the observation that characterizes the current state of the environment at the current time step: $Z_t = \phi(o_t, Z_{t-1})$.

The encoder representation Z includes an ordered collection of a respective feature vector for each of a plurality of spatially distinct portions of the observation. Each respective feature vector has a plurality of dimensions, i.e., has a plurality of numeric or other values.

For each of a plurality of subschema recurrent neural networks, the system determines a corresponding subschema query $q_{t-1}$ at the current time step from (i) the subschema hidden state $h_{t-1}$ of the subschema recurrent neural network at the current time step, and one or more of: (ii) a preceding action $a_{t-1}$ performed by the agent in response to a preceding observation characterizing a preceding state of the environment state that precedes the current state of the environment state, or (iii) a preceding reward $r_{t-1}$ received in response to the agent performing the preceding action.

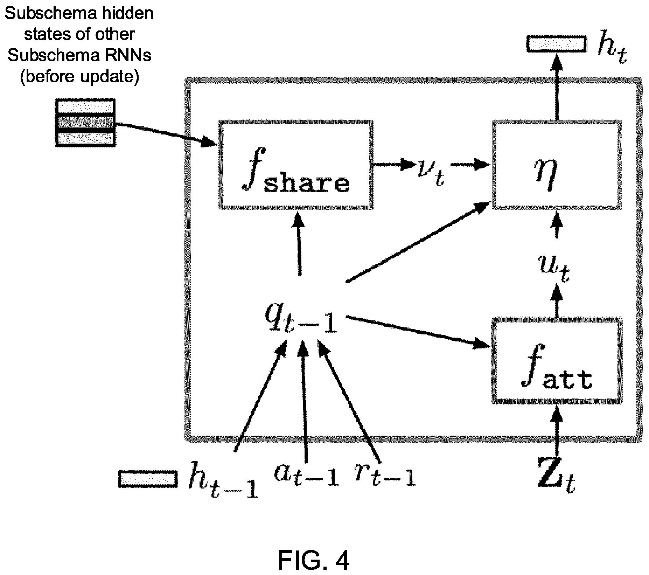

FIG. 4 is an example illustration of operations performed by the agent neural network 110 of FIG. 1. As illustrated, in some implementations, the system can generate the subschema query that is a vector concatenation of (i)-(iii): $q_{t-1} = [h_{t-1}, a_{t-1}, r_{t-1}]$. In some implementations, the system can generate the subschema query from additional, relevant context information, such as task description text that specifies the task being performed by the agent, for example by adding an embedding of the task description text to the vector concatenation.

The system applies a dynamic feature attention mechanism using a subschema query $q_{t-1}$ at the current time step to generate an attended encoder observation $u_t$ for each subschema recurrent neural network at the current time step. This generally involves generating a respective attention weight for each of the plurality of dimensions from at least a subschema hidden state of the subschema recurrent neural network (step 306); and generating an attended encoder representation by applying the respective attention weights to the respective feature vector for each of the plurality of spatially distinct portions of the observation (step 308).

To generate the respective attention weight for each of the plurality of dimensions, the system applies one or more sets of learnt feature coefficient weights to the subschema query. Some implementations of this can include applying one learnt feature coefficient weight to each element of the vector concatenation that represents the subschema query, and then applying a sigmoid function to the weighted vector concatenation. The output of the sigmoid function defines a respective attention weight for each of the plurality of dimensions in each feature vector included in the encoder representation $Z_t$. While in some cases different weights can be generated for different dimensions, in other cases, a same weight can be uniformly generated for all of the plurality of dimensions.

Next, to generate the attended encoder representation by applying the respective attention weights to the respective feature vector for each of the plurality of spatially distinct portions of the observation, the system computes an element-wise product between the respective attention weights and the encoder representation $Z_t$, which includes a respective feature vector for each of the plurality of spatially distinct portions of the observation. In some implementations, the system also applies a first transformation (e.g., a linear projection) using learnt parameters to the encoder representation prior to the element-wise product computation. Further, in some implementations, the system also applies a second transformation using learnt parameters to the result of the element-wise product computation.

In mathematical terms, and as illustrated in FIG. 4, the system can generate an attended encoder observation $u_t$ for each subschema recurrent neural network at the current time step t by computing:

$$u_t = f_{att}(Z_t, q_{t-1}),$$

where

$$f_{att}(Z_t, q_{t-1}) = (Z_t W_1 \odot \sigma(W_{att} q_{t-1})) W_2,$$

and where

$Z_t$ is the encoder representation of the observation that characterizes the current state of the environment at the current time step, $W_1$ and $W_2$ are the parameters defining the first and second transformations, respectively, $\odot$ denotes an element-wise product, $\sigma$ denotes the sigmoid function, $W_{att}$ are the feature coefficient weights, and $q_{t-1}$ is the subschema query for the subschema recurrent neural network at the current time step.

Optionally, in some implementations, for each of the plurality of subschema recurrent neural networks, the system additionally obtains shared subschema information by using a scaled dot-product attention mechanism from the subschema hidden states of other subschema recurrent neural networks at the current time step (step 312).

The scaled dot-product attention mechanism maps a query and a set of key-value pairs to an output, where the query q, keys k, and values v are all vectors. The output is computed as a weighted sum of the values, where the weight assigned to each value is computed by a compatibility function of the query with the corresponding key. In scaled dot-product attention, for a given query, the attention layer computes the dot products of the query with all of the keys, divides each of the dot products by a scaling factor, e.g., by the square root of the dimensions of the queries and keys, and then applies a softmax function over the scaled dot products to obtain the weights on the values. The attention layer then computes a weighted sum of the values in accordance with these weights. Thus, for scaled dot-product attention the compatibility function is the dot product and the output of the compatibility function is further scaled by the scaling factor.

In mathematical terms, and as illustrated in FIG. 4, the system can obtain the shared subschema information $v_t$ for each subschema recurrent neural network at the current time step t by computing:

$$v_t = f_{share}(s_{t-1}, q_{t-1}),$$

where

$$f_{share}(S_{t-1}, q_{t-1}) = softmax(\frac{q_r K^T}{\sqrt{d_h}})V,$$

and where

$S_{t-1} = [h_{t-1}^1, ... h_{t-1}^n]$ is a vector concatenation of the respective subschema hidden states of the plurality of subschema recurrent neural networks at the current time step, and $q_{t-1}$ is the subschema query for the subschema recurrent neural network at the current time step.

For each subschema recurrent neural network, the system uses the subschema query for the subschema recurrent neural network to generate the queries for the subschema recurrent neural network to be used in the attention mechanism; the respective subschema hidden states of the plurality of subschema recurrent neural networks at the current time step to generate the keys to be used in the attention mechanism; and the respective subschema hidden states of the plurality of subschema recurrent neural networks at the current time step to generate the values to be used in the attention mechanism.

In some implementations, the system can generate the queries by applying a sequence of one or more learnt query transformations to the subschema query. Likewise, the system can generate the keys (or values) by applying a sequence of one or more learnt key (or value) transformations to the respective subschema hidden states of the plurality of subschema recurrent neural networks.

To better account for situations where no relevant information could be obtained from other subschema recurrent neural networks, in some implementations, a null or zero vector (representing no information to retrieve) is used in addition to the respective subschema hidden states of the plurality of subschema recurrent neural networks to generate the keys and values. That is, in some implementations, the system can generate the keys (or values) by applying a sequence of one or more learnt key (or value) transformations to a concatenation of (i) the respective subschema hidden states of the plurality of subschema recurrent neural networks and (ii) a null or zero vector. As such, a null or zero vector can be used in addition to the subschema hidden states in computing the output of the scaled dot-product attention mechanism.

The system updates the subschema hidden state using the attended encoder representation and, in some implementations, the shared subschema information (step 312). As illustrated in FIG. 4, the system processes a respective input for each subschema recurrent neural network input that includes (i) the subschema query $q_{t-1}$ at the current time step, (ii) the attended encoder observation $u_t$ at the current time step, and, in some implementations, (iii) the shared subschema information $v_t$ at the current time step using the subschema recurrent neural network (denoted as $\eta$) to update its internal state, i.e., to generate the updated subschema hidden state $h_t$ at the current time step.

These updated subschema hidden states will then be combined to generate a policy input for an action selection policy neural network. In some implementations, the system can generate the policy input that is a vector concatenation of the updated subschema hidden state of the plurality of subschema recurrent s:

$$S_t = [h_t^1, ... h_t^n].$$

The system selects an action to be performed by the agent in response to the observation (step 314). The system can do this by processing the policy input using the action selection policy neural network to generate an action selection policy output for the current time step, and then selectin the action based on the action selection policy output. As described above, the action selection policy neural network can be configured to generate any of a variety of action selection policy outputs that can be used to control the agent in accordance with an action selection policy. To cause the agent to perform the selected action, the system can for example transmit, to a control system of the agent, instructions that cause the control system to control the agent or directly control the agent, e.g., directly apply torques to the joints of the agent.

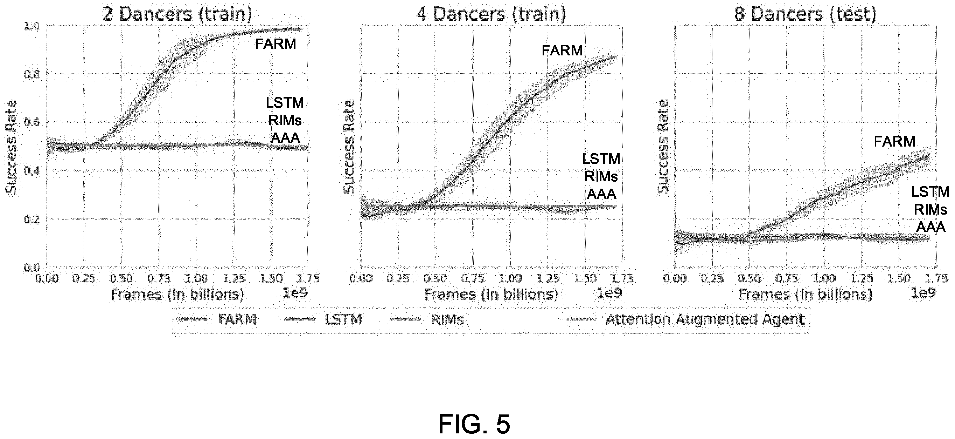

FIG. 5 shows a quantitative example of the performance gains that can be achieved by using an agent neural network described in this specification. Specifically, FIG. 5 shows three plots of results that can be achieved by using the agent neural network 110 of FIG. 1 on the task of recalling spatiotemporal details of a 2D environment (such as the different shapes and colors of the "dancers"), described in more detail in Andrew Kyle Lampinen, et al. Towards mental time travel: a hierarchical memory for reinforcement learning agents. arXiv, 2021. Each plot presents the success rate means and standard errors computed using 5 seeds.

It can be appreciated that, for each setting of the task (the agent seeing 2, 4, or 8 dancers), the FARM agent (corresponding to an agent controlled using the agent neural network described in this specification) outperforms the LSTM agent (corresponding to an agent controlled using a neural network having an existing recurrent architecture - the Long Short-term Memory (LSTM) architecture described in Sepp Hochreite, et al. "Long short-term memory." Neural computation, 9(8): 1735-1780, 1997), the RIMs agent (corresponding to an agent controlled using a neural network having another existing recurrent architecture - the Recurrent Independent Mechanisms architecture described in Anirudh Goyal, et al. "Recurrent independent mechanisms." ICLR, 2020b), and the Attention Augmented Agent (AAA) (corresponding to an agent controlled using a neural network using an existing attention mechanism described in Alex Mott, et al. "Towards interpretable reinforcement learning using attention augmented agents." NeurIPS, 2019) by a substantial margin.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are possible within the scope of the following claims. For example, multitasking and parallel processing may be advantageous.

## Claims

1. A computer-implemented method (300) for controlling an agent (102) interacting with an environment (104) to perform a task, the method comprising:

   receiving (302) an observation (108) that characterizes a current state of the environment (104);
   processing (304) the observation (108) using an encoder neural network configured to receive as input the observation (108) and to generate as output an encoder representation of the observation (108) that comprises a respective feature vector for each of a plurality of spatially distinct portions of the observation (108), wherein each respective feature vector has a plurality of dimensions;
   for each of a plurality of subschema recurrent neural networks:

   generating (306) a respective attention weight for each of the plurality of dimensions from at least a subschema hidden state of the subschema recurrent neural network,
   generating (308) an attended encoder representation, comprising applying, to the respective feature vector for each of the plurality of spatially distinct portions of the observation (108), the respective attention weights, and
   updating (310) the subschema hidden state using at least the attended encoder representation; and

   selecting (314) an action (106) to be performed by the agent (102) in response to the observation (108) using the updated subschema hidden states of the plurality of subschema recurrent neural networks;
and wherein:

(i) the environment (104) is a real-world environment, the agent (102) is a mechanical agent interacting with the real-world environment, and the observation comprises data from one or more sensors configured to sense the real world; or
(ii) the environment (104) is a real-world manufacturing environment for manufacturing a product, the agent (102) comprises an electronic agent configured to control a manufacturing unit that operates to manufacture the product, and the observations are made by sensors sensing a state of the manufacturing environment; or
(iii) the environment (104) is the real-world environment of a service facility comprising a plurality of items of electronic equipment, the agent (102) comprises an electronic agent configured to control operation of the items of equipment, and the observations are made by sensors sensing a state of the physical environment of the facility or by sensors sensing a state of one or more of items of equipment; or
(iv) the environment (104) is the real-world environment of a power generation facility, task comprises a control task to control power generated by the facility, and the agent (102) comprises an electronic agent configured to control the generation of electrical power by the facility or the coupling of generated electrical power into the grid; or
(v) the environment (104) is a real-world environment and the agent (102) manages distribution of tasks across computing resources, the actions including assigning tasks to particular computing resources.

2. The method of claim 1, wherein the observation (108) comprises an image, and wherein the plurality of spatially distinct portions of the observation correspond to different spatial positions of the image.

3. The method of claim 1, wherein the observation (108) comprises an audio observation, and wherein the plurality of spatially distinct portions of the observation correspond to different frequency bands of the audio observation.

4. The method of claim 1, wherein the observation (108) comprises proprioception information of a robot, and wherein the plurality of spatially distinct portions of the observation correspond to different body parts of the robot.

5. The method of any one of claims 1-4, further comprising, for each of the plurality of subschema recurrent neural networks:
determining a subschema query from (i) the subschema hidden state of the subschema recurrent neural network and one or more of: (ii) a preceding action performed by the agent (102) in response to a preceding observation (108) characterizing a preceding state of the environment state that precedes the current state of the environment state, or (iii) a preceding reward received in response to the agent (102) performing the preceding action.

6. The method of claim 5, further comprising determining the subschema query from task description text that specifies the task being performed by the agent (102).

7. The method of any one of claims 4-6, wherein generating the respective attention weight for each of the plurality of dimensions comprises:
generating the respective attention weight for each of the plurality of dimensions based on applying one or more sets of learnt feature coefficient weights to the subschema query.

8. The method of any one of claims 1-7, wherein applying, to the respective feature vector for each of the plurality of spatially distinct portions of the observation (108), the respective attention weights comprises:
computing an element-wise product between the respective attention weights and the respective feature vector for each of the plurality of spatially distinct portions of the observation (108).

9. The method of any one of claims 5-8, further comprising, for each of the plurality of subschema recurrent neural networks:
obtaining shared subschema information from the subschema hidden states of other subschema recurrent neural networks in the plurality of subschema recurrent neural networks, comprising applying an attention mechanism over the subschema hidden states of the plurality of subschema recurrent neural networks using one or more queries derived from the subschema query of the subschema recurrent neural network.

10. The method of claim 9, wherein obtaining the shared subschema information further comprises applying the attention mechanism over a null vector in addition to the subschema hidden states of the plurality of subschema recurrent neural networks.

**11.** The method of any one of claims 9-10, wherein updating the subschema hidden state comprises updating the subschema hidden state using the attended encoder representation and the shared subschema information.

**12.** The method of any one of claims 1-11, wherein selecting the action to be performed by the agent (102) comprises:

processing a policy input comprising the updated subschema hidden states of the plurality of subschema recurrent neural networks using an action selection policy neural network to generate an action selection policy output that specifies the action to be performed by the agent (102).

**13.** The method of claim 12, further comprising training the action selection policy neural network through reinforcement learning to determine trained parameter values of the action selection policy neural network.

**14.** The method of claim 13, further comprising determining respective trained parameter values of the encoder neural network and the plurality of subschema recurrent neural networks through reinforcement learning.

**15.** The method of any one of claims 1-14, wherein the task comprises one of: an object manipulation task or an environment navigation task.

**16.** One or more computer-readable storage media storing instructions that when executed by one or more computers cause the one or more computers to perform the respective operations of any one of the methods of any of the preceding claims.

**17.** A system comprising one or more computers and one or more storage devices storing instructions that when executed by the one or more computers cause the one or more computers to perform the respective operations of any one of the methods of any of claims 1-15.

**Patentansprüche**

**1.** Computerimplementiertes Verfahren (300) zum Steuern eines Agenten (102), der mit einer Umgebung (104) interagiert, um eine Aufgabe durchzuführen, wobei das Verfahren Folgendes umfasst:

Empfangen (302) einer Beobachtung (108), die einen aktuellen Zustand der Umgebung (104) charakterisiert;
Verarbeiten (304) der Beobachtung (108) unter Verwendung eines neuronalen Codierer-Netzwerks, das konfiguriert ist, um als Eingabe die Beobachtung (108) zu empfangen und als Ausgabe eine Codierer-Darstellung der Beobachtung (108) zu erzeugen, die einen jeweiligen Merkmalsvektor für jeden einer Vielzahl von räumlich getrennten Abschnitten der Beobachtung (108) umfasst, wobei jeder jeweilige Merkmalsvektor eine Vielzahl von Dimensionen aufweist;
für jedes einer Vielzahl von rekurrenten neuronalen Teilschema-Netzwerken:

Erzeugen (306) eines jeweiligen Aufmerksamkeitsgewichts für jede der Vielzahl von Dimensionen aus mindestens einem verborgenen Teilschema-Zustand des rekurrenten neuronalen Teilschema-Netzwerks,
Erzeugen (308) einer mit Aufmerksamkeit versehenen Codierer-Darstellung, umfassend ein Anwenden, auf den jeweiligen Merkmalsvektor für jeden der Vielzahl von räumlich getrennten Abschnitten der Beobachtung (108), der jeweiligen Aufmerksamkeitsgewichte, und
Aktualisieren (310) des verborgenen Teilschema-Zustands unter Verwendung mindestens der mit Aufmerksamkeit versehenen Codierer-Darstellung; und
Auswählen (314) einer Aktion (106), die von dem Agenten (102) als Reaktion auf die Beobachtung (108) durchzuführen ist, unter Verwendung der aktualisierten verborgenen Teilschema-Zustände der Vielzahl von rekurrenten neuronalen Teilschema-Netzwerken;
und wobei:

(i) die Umgebung (104) eine reale Umgebung ist, der Agent (102) ein mechanischer Agent ist, der mit der realen Umgebung interagiert, und die Beobachtung Daten von einem oder mehreren Sensoren umfasst, die konfiguriert sind, um die reale Welt zu erfassen; oder
(ii) die Umgebung (104) eine reale Fertigungsumgebung zum Fertigen eines Produkts ist, der Agent (102) einen elektronischen Agenten umfasst, der konfiguriert ist, um eine Fertigungseinheit zu steuern, die arbeitet, um das Produkt zu fertigen, und die Beobachtungen von Sensoren gemacht werden, die einen Zustand der Fertigungsumgebung erfassen; oder
(iii) die Umgebung (104) die reale Umgebung einer Dienstleistungseinrichtung ist, die eine Vielzahl von elektronischen Ausrüstungsgegenständen umfasst, der Agent (102) einen elektronischen Agenten umfasst, der konfiguriert ist, um einen Betrieb der Ausrüstungsgegenstände zu steuern, und die Beobachtungen von Sensoren gemacht werden, die einen Zustand der physischen Umgebung der Einrichtung erfassen, oder von Sensoren, die einen Zustand von einem oder mehreren Ausrüstungsgegenständen erfassen; oder

(iv) die Umgebung (104) die reale Umgebung einer Energieerzeugungseinrichtung ist, die Aufgabe eine Steuerungsaufgabe umfasst, um Energie zu steuern, die durch die Einrichtung erzeugt wird, und der Agent (102) einen elektronischen Agenten umfasst, der konfiguriert ist, um die Erzeugung von elektrischer Energie durch die Einrichtung oder die Einspeisung von erzeugter elektrischer Energie in das Netz zu steuern; oder

(v) die Umgebung (104) eine reale Umgebung ist und der Agent (102) eine Verteilung von Aufgaben über Rechenressourcen hinweg verwaltet, wobei die Aktionen ein Zuweisen von Aufgaben an bestimmte Rechenressourcen beinhalten.

2. Verfahren nach Anspruch 1, wobei die Beobachtung (108) ein Bild umfasst, und wobei die Vielzahl von räumlich getrennten Abschnitten der Beobachtung unterschiedlichen räumlichen Positionen des Bildes entsprechen.

3. Verfahren nach Anspruch 1, wobei die Beobachtung (108) eine Audiobeobachtung umfasst, und wobei die Vielzahl von räumlich getrennten Abschnitten der Beobachtung unterschiedlichen Frequenzbändern der Audiobeobachtung entsprechen.

4. Verfahren nach Anspruch 1, wobei die Beobachtung (108) Propriozeptionsinformationen eines Roboters umfasst, und wobei die Vielzahl von räumlich getrennten Abschnitten der Beobachtung unterschiedlichen Körperteilen des Roboters entsprechen.

5. Verfahren nach einem der Ansprüche 1-4, ferner umfassend, für jedes der Vielzahl von rekurrenten neuronalen Teilschema-Netzwerken:
Bestimmen einer Teilschema-Abfrage aus (i) dem verborgenen Teilschema-Zustand des rekurrenten neuronalen Teilschema-Netzwerks und einem oder mehreren von: (ii) einer vorhergehenden Aktion, die von dem Agenten (102) als Reaktion auf eine vorhergehende Beobachtung (108) durchgeführt wird, die einen vorhergehenden Zustand des Umgebungszustands charakterisiert, der dem aktuellen Zustand des Umgebungszustands vorausgeht, oder (iii) einer vorhergehenden Belohnung, die als Reaktion darauf empfangen wird, dass der Agent (102) die vorhergehende Aktion durchführt.

6. Verfahren nach Anspruch 5, ferner umfassend Bestimmen der Teilschema-Abfrage aus einem Aufgabenbeschreibungstext, der die Aufgabe spezifiziert, die von dem Agenten (102) durchgeführt wird.

7. Verfahren nach einem der Ansprüche 4-6, wobei das Erzeugen des jeweiligen Aufmerksamkeitsgewichts für jede der Vielzahl von Dimensionen Folgendes umfasst:
Erzeugen des jeweiligen Aufmerksamkeitsgewichts für jede der Vielzahl von Dimensionen basierend auf einem Anwenden von einem oder mehreren Sätzen von gelernten Merkmalskoeffizientengewichten auf die Teilschema-Abfrage.

8. Verfahren nach einem der Ansprüche 1-7, wobei das Anwenden, auf den jeweiligen Merkmalsvektor für jeden der Vielzahl von räumlich getrennten Abschnitten der Beobachtung (108), der jeweiligen Aufmerksamkeitsgewichte Folgendes umfasst:
Berechnen eines elementweisen Produkts zwischen den jeweiligen Aufmerksamkeitsgewichten und dem jeweiligen Merkmalsvektor für jeden der Vielzahl von räumlich getrennten Abschnitten der Beobachtung (108).

9. Verfahren nach einem der Ansprüche 5-8, ferner umfassend, für jedes der Vielzahl von rekurrenten neuronalen Teilschema-Netzwerken:
Erhalten von geteilten Teilschema-Informationen aus den verborgenen Teilschema-Zuständen von anderen rekurrenten neuronalen Teilschema-Netzwerken in der Vielzahl von rekurrenten neuronalen Teilschema-Netzwerken, umfassend Anwenden eines Aufmerksamkeitsmechanismus über die verborgenen Teilschema-Zustände der Vielzahl von rekurrenten neuronalen Teilschema-Netzwerken unter Verwendung von einer oder mehreren Abfragen, die von der Teilschema-Abfrage des rekurrenten neuronalen Teilschema-Netzwerks abgeleitet sind.

10. Verfahren nach Anspruch 9, wobei das Erhalten der geteilten Teilschema-Informationen ferner ein Anwenden des Aufmerksamkeitsmechanismus über einen Nullvektor zusätzlich zu den verborgenen Teilschema-Zuständen der Vielzahl von rekurrenten neuronalen Teilschema-Netzwerken umfasst.

11. Verfahren nach einem der Ansprüche 9-10, wobei das Aktualisieren des verborgenen Teilschema-Zustands ein Aktualisieren des verborgenen Teilschema-Zustands unter Verwendung der mit Aufmerksamkeit versehenen Codierer-Darstellung und der geteilten Teilschema-Informationen umfasst.

12. Verfahren nach einem der Ansprüche 1-11, wobei das Auswählen der Aktion, die von dem Agenten (102) durchzuführen ist, Folgendes umfasst: Verarbeiten einer Richtlinieneingabe, die die aktualisierten verborgenen Teilschema-Zustände der Vielzahl von rekurrenten neuronalen Teilschema-Netzwerken umfasst, unter Verwendung eines neuronalen Aktionsauswahlrichtlinien-Netzwerks, um eine Aktionsauswahlrichtlinienausgabe zu erzeugen, die die Aktion spezifiziert, die von dem Agenten (102) durchzuführen ist.

13. Verfahren nach Anspruch 12, ferner umfassend Trainieren des neuronalen Aktionsauswahlrichtlinien-Netzwerks durch Verstärkungslernen, um trainierte Parameterwerte des neuronalen Aktionsauswahlrichtlinien-Netzwerks zu bestimmen.

14. Verfahren nach Anspruch 13, ferner umfassend Bestimmen von jeweiligen trainierten Parameterwerten des neuronalen Codierer-Netzwerks und der Vielzahl von rekurrenten neuronalen Teilschema-Netzwerken durch Verstärkungslernen.

15. Verfahren nach einem der Ansprüche 1-14, wobei die Aufgabe eines von Folgenden umfasst: eine Objektmanipulationsaufgabe oder eine Umgebungsnavigationsaufgabe.

16. Ein oder mehrere computerlesbare Speichermedien, die Anweisungen speichern, die, wenn sie von einem oder mehreren Computern ausgeführt werden, bewirken, dass der eine oder die mehreren Computer die jeweiligen Operationen eines der Verfahren nach einem der vorhergehenden Ansprüche durchführen.

17. System, umfassend einen oder mehrere Computer und eine oder mehrere Speichervorrichtungen, die Anweisungen speichern, die, wenn sie von dem einen oder den mehreren Computern ausgeführt werden, bewirken, dass der eine oder die mehreren Computer die jeweiligen Operationen eines der Verfahren nach einem der Ansprüche 1-15 durchführen.

**Revendications**

1. Procédé mis en œuvre par ordinateur (300) de commande d'un agent (102) interagissant avec un environnement (104) pour réaliser une tâche, le procédé comprenant :

la réception (302) d'une observation (108) qui caractérise un état actuel de l'environnement (104) ;
le traitement (304) de l'observation (108) à l'aide d'un réseau neuronal d'encodeur configuré pour recevoir en entrée l'observation (108) et pour générer en sortie une représentation d'encodeur de l'observation (108) qui comprend un vecteur de caractéristique respectif pour chacune d'une pluralité de portions spatialement distinctes de l'observation (108), dans lequel chaque vecteur de caractéristique respectif a une pluralité de dimensions ;
pour chacun d'une pluralité de réseaux neuronaux récurrents de sous-schéma :

la génération (306) d'un poids d'attention respectif pour chacune de la pluralité de dimensions à partir d'au moins un état caché de sous-schéma du réseau neuronal récurrent de sous-schéma,
la génération (308) d'une représentation d'encodeur assisté, comprenant l'application, au vecteur de caractéristique respectif pour chacune de la pluralité de portions spatialement distinctes de l'observation (108), des poids d'attention respectifs, et
la mise à jour (310) de l'état caché de sous-schéma à l'aide au moins de la représentation d'encodeur assisté ; et
la sélection (314) d'une action (106) destinée à être réalisée par l'agent (102) en réponse à l'observation (108) à l'aide des états cachés de sous-schéma mis à jour de la pluralité de réseaux neuronaux récurrents de sous-schéma ;
et dans lequel :

(i) l'environnement (104) est un environnement du monde réel, l'agent (102) est un agent mécanique interagissant avec l'environnement du monde réel, et l'observation comprend des données provenant d'un ou plusieurs capteurs configurés pour détecter le monde réel ; ou
(ii) l'environnement (104) est un environnement de fabrication du monde réel destiné à la production d'un produit, l'agent (102) comprend un agent électronique configuré pour commander une unité de fabrication qui fonctionne pour fabriquer le produit, et les observations sont effectuées par des capteurs qui détectent un état de l'environnement de fabrication ; ou
(iii) l'environnement (104) est l'environnement du monde réel d'une installation de service comprenant une pluralité d'éléments d'équipement électronique, l'agent (102) comprend un agent électronique configuré pour commander le fonctionnement des éléments d'équipement, et les observations sont effectuées par des capteurs détectant un état de l'environnement physique de l'installation ou par des capteurs détectant un état d'un ou plusieurs des éléments d'équipement ; ou

(iv) l'environnement (104) est l'environnement du monde réel d'une installation de production d'énergie, la tâche comprend une tâche de commande pour commander l'énergie produite par l'installation, et l'agent (102) comprend un agent électronique configuré pour commander la production d'énergie électrique par l'installation ou le couplage de l'énergie électrique produite au réseau ; ou

(v) l'environnement (104) est un environnement du monde réel et l'agent (102) gère la répartition de tâches entre des ressources informatiques, les actions comportant l'attribution de tâches à des ressources informatiques particulières.

2. Procédé selon la revendication 1, dans lequel l'observation (108) comprend une image, et dans lequel la pluralité de portions spatialement distinctes de l'observation correspondent à différentes positions spatiales de l'image.

3. Procédé selon la revendication 1, dans lequel l'observation (108) comprend une observation audio, et dans lequel la pluralité de portions spatialement distinctes de l'observation correspondent à différentes bandes de fréquences de l'observation audio.

4. Procédé selon la revendication 1, dans lequel l'observation (108) comprend des informations de proprioception d'un robot, et dans lequel la pluralité de portions spatialement distinctes de l'observation correspondent à différentes parties de corps du robot.

5. Procédé selon l'une quelconque des revendications 1 à 4, comprenant en outre, pour chacun de la pluralité de réseaux neuronaux récurrents de sous-schéma : la détermination d'une requête de sous-schéma à partir de (i) l'état caché de sous-schéma du réseau neuronal récurrent de sous-schéma et d'un ou plusieurs des éléments suivants : (ii) une action précédente réalisée par l'agent (102) en réponse à une observation précédente (108) caractérisant un état précédent de l'état d'environnement qui précède l'état actuel de l'état d'environnement, ou (iii) une récompense précédente reçue en réponse au fait que l'agent (102) réalise l'action précédente.

6. Procédé selon la revendication 5, comprenant en outre la détermination de la requête de sous-schéma à partir du texte de description de tâche qui spécifie la tâche réalisée par l'agent (102).

7. Procédé selon l'une quelconque des revendications 4 à 6, dans lequel la génération du poids d'attention respectif pour chacune de la pluralité de dimensions comprend : la génération du poids d'attention respectif pour chacune de la pluralité de dimensions sur la base de l'application d'un ou plusieurs ensembles de poids de coefficient de caractéristique appris à la requête de sous-schéma.

8. Procédé selon l'une quelconque des revendications 1 à 7, dans lequel l'application, au vecteur de caractéristique respectif pour chacune de la pluralité de portions spatialement distinctes de l'observation (108), des poids d'attention respectifs comprend : le calcul d'un produit élément par élément entre les poids d'attention respectifs et le vecteur de caractéristique respectif pour chacune de la pluralité de portions spatialement distinctes de l'observation (108).

9. Procédé selon l'une quelconque des revendications 5 à 8, comprenant en outre, pour chacun de la pluralité de réseaux neuronaux récurrents de sous-schéma : l'obtention d'informations de sous-schéma partagées à partir des états cachés de sous-schéma d'autres réseaux neuronaux récurrents de sous-schéma dans la pluralité de réseaux neuronaux récurrents de sous-schéma, comprenant l'application d'un mécanisme d'attention sur les états cachés de sous-schéma de la pluralité de réseaux neuronaux récurrents de sous-schéma à l'aide d'une ou plusieurs requêtes dérivées de la requête de sous-schéma du réseau neuronal récurrent de sous-schéma.

10. Procédé selon la revendication 9, dans lequel l'obtention des informations de sous-schéma partagées comprend en outre l'application du mécanisme d'attention sur un vecteur nul en plus des états cachés de sous-schéma de la pluralité de réseaux neuronaux récurrents de sous-schéma.

11. Procédé selon l'une quelconque des revendications 9 et 10, dans lequel la mise à jour de l'état caché de sous-schéma comprend la mise à jour de l'état caché de sous-schéma à l'aide de la représentation d'encodeur assisté et des informations de sous-schéma partagées.

12. Procédé selon l'une quelconque des revendications 1 à 11, dans lequel la sélection de l'action destinée à être réalisée par l'agent (102) comprend :
le traitement d'une entrée de politique comprenant les états cachés de sous-schéma mis à jour de la pluralité de réseaux neuronaux récurrents de sous-schéma à l'aide d'un réseau neuronal de politique de sélection d'action pour générer une sortie de politique de sélection d'action qui spécifie l'action destinée à être réalisée par l'agent (102).

13. Procédé selon la revendication 12, comprenant en outre l'entraînement du réseau neuronal de politique de sélection d'action par apprentissage par renforcement pour déterminer les valeurs de paramètre entraîné du réseau neuronal de politique de sélection d'action.

14. Procédé selon la revendication 13, comprenant en outre la détermination de valeurs de paramètre entraîné respectif du réseau neuronal d'encodeur et de la pluralité de réseaux neuronaux récurrents de sous-schéma par apprentissage par renforcement.

15. Procédé selon l'une quelconque des revendications 1 à 14, dans lequel la tâche comprend l'une des tâches suivantes : une tâche de manipulation d'objet ou une tâche de navigation d'environnement.

16. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations respectives de l'un quelconque des procédés selon l'une quelconque des revendications précédentes.

17. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations respectives de l'un quelconque des procédés selon l'une quelconque des revendications 1 à 15.

FIG. 1

FIG. 2

$\mathcal{S}^{300}$

```
┌─────────────────────────────────────────┐
│ Receive a current observation characterizing a current │
│        state of the environment      302 │
└─────────────────────────────────────────┘
                    ↓
┌─────────────────────────────────────────┐
│ Generate an encoder representation of the observation │
│                                      304 │
└─────────────────────────────────────────┘
                    ↓
```

For each of a plurality of subschema
recurrent neural networks:

```
┌─────────────────────────────────────────┐
│ Generate a respective attention weight for each of │
│        the plurality of dimension    306 │
└─────────────────────────────────────────┘
                    ↓
┌─────────────────────────────────────────┐
│ Generate an attended encoder representation │
│                                      308 │
└─────────────────────────────────────────┘
                    ↓
┌─────────────────────────────────────────┐
│ Update the subschema hidden state    │
│                                      310 │
└─────────────────────────────────────────┘
                    ↓
┌─────────────────────────────────────────┐
│ Obtain shared subschema information from other │
│    subschema recurrent neural networks  312 │
└─────────────────────────────────────────┘
```

```
┌─────────────────────────────────────────┐
│ Select an action to be performed by the agent using the │
│       updated subschema hidden states  314 │
└─────────────────────────────────────────┘
```

FIG. 3

FIG. 4

EP 4 163 826 B1

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210114209 A1

**Non-patent literature cited in the description**

- **ESPEHOLT, L et al.** Impala: Scalable distributed deep-rl with importance weighted actor-learner architectures. *arXiv preprint arXiv:1802.01561*, 2018
- **ANDREW KYLE LAMPINEN et al.** Towards mental time travel: a hierarchical memory for reinforcement learning agents. *arXiv*, 2021
- **SEPP HOCHREITE et al.** Long short-term memory. *Neural computation*, 1997, vol. 9 (8), 1735-1780
- **ANIRUDH GOYAL et al.** Recurrent independent mechanisms. *ICLR*, 2020
- **ALEX MOTT et al.** Towards interpretable reinforcement learning using attention augmented agents. *NeurIPS*, 2019